(19) Europäisches Patentamt / European Patent Office / Office européen des brevets

(11) **EP 4 435 753 A1**

(12) **EUROPEAN PATENT APPLICATION**
published in accordance with Art. 153(4) EPC

(43) Date of publication:
**25.09.2024 Bulletin 2024/39**

(21) Application number: **22902892.3**

(22) Date of filing: **24.08.2022**

(51) International Patent Classification (IPC):
**G08G 1/16** $^{(2006.01)}$

(52) Cooperative Patent Classification (CPC):
**G08G 1/01; G08G 1/0967; G08G 1/16;** Y02P 90/02

(86) International application number:
**PCT/CN2022/114548**

(87) International publication number:
**WO 2023/103459 (15.06.2023 Gazette 2023/24)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.12.2021 CN 202111488392**

(71) Applicant: **ZTE Corporation**
**Shenzhen, Guangdong 518057 (CN)**

(72) Inventor: **JIA, Minghe**
**Shenzhen, Guangdong 518057 (CN)**

(74) Representative: **Zoli, Filippo**
**Brunacci & Partners S.r.l.**
**Via Pietro Giardini, 625**
**41125 Modena (IT)**

(54) **VEHICLE CONTROL METHOD, DECISION SERVER, AND STORAGE MEDIUM**

(57)    A vehicle control method, a decision server, a vehicle-road collaboration apparatus, and a vehicle-mounted terminal. The method comprises: receiving first reference information, which is collected by a vehicle-road collaboration apparatus in a target road section (901); according to the first reference information, determining target control information corresponding to each vehicle to be controlled (902); and sending the target control information to said corresponding vehicle, so as to control said corresponding vehicle (903).

```
┌─────────────────────────────────────────────────────────────┐
│ S901: Receive first reference information collected by a       │
│ vehicle-road coordination apparatus in a target road section  │
└─────────────────────────────────────────────────────────────┘
                              │
                              ▼
┌─────────────────────────────────────────────────────────────┐
│ S902: Obtain target control information corresponding to each │
│ to-be-controlled vehicle according to the first reference     │
│ information                                                    │
└─────────────────────────────────────────────────────────────┘
                              │
                              ▼
┌─────────────────────────────────────────────────────────────┐
│ S903: Send the target control information to the              │
│ corresponding to-be-controlled vehicle, to perform control of │
│ the corresponding to-be-controlled vehicle                    │
└─────────────────────────────────────────────────────────────┘
```

FIG. 9

EP 4 435 753 A1

**Description**

**CROSS-REFERENCE TO RELATED APPLICATION**

This application is filed on the basis of Chinese Patent Application No. 202111488392.7, filed on December 7, 2021, and claims priority to the Chinese patent application, the entire contents of which are incorporated herein by reference.

**TECHNICAL FIELD**

The present disclosure relates to, but not limited to, the technical field of traffic, and more particularly, to a vehicle control method, a decision server, and a storage medium.

**BACKGROUND**

With development of communication technologies, the application of vehicle-road coordination technologies will become increasingly popular. The vehicle-road coordination technologies can be used in automated driving, and can play a significant role in terms of assisted driving safety, automated driving of a specific vehicle on a specific road section, and automated driving of all vehicles in a full-traffic road section. The accuracy of vehicle control is closely linked to driving safety. Therefore, there is an urgent need to improve the accuracy of vehicle control to avoid vehicle collisions.

**SUMMARY**

The following is an overview of the subject matter set forth in this description. This summary is not intended to limit the scope of protection of the claims.
Embodiments of the present disclosure provide a vehicle control method, a decision server, and a storage medium.
According to a first aspect of the present disclosure, an embodiment provides a vehicle control method, including: receiving first reference information collected by a vehicle-road coordination apparatus in a target road section, where the first reference information is obtained based on vehicle status information of a plurality of to-be-controlled vehicles within a coverage area of the vehicle-road coordination apparatus; determining, according to the first reference information, target control information corresponding to each to-be-controlled vehicle; and sending the target control information to the corresponding to-be-controlled vehicle, to implement control of the corresponding to-be-controlled vehicle.
According to a second aspect of the present disclosure, an embodiment provides a decision server, including a memory and a processor, where the memory stores a computer program which, when executed by the processor, causes the processor to implement the vehicle control method according to the first aspect.
According to a third aspect of the present disclosure, an embodiment provides a computer-readable storage medium, storing a program which, when executed by a processor, causes the processor to implemens the vehicle control method according to the first aspect.
Additional features and advantages of the present disclosure will be set forth in the description which follows, and in part will be obvious from the description, or may be learned by the practice of the present disclosure. The objects and other advantages of the present disclosure can be realized and obtained by the structures particularly pointed out in the description, claims, and drawings

**BRIEF DESCRIPTION OF DRAWINGS**

The drawings are provided for a further understanding of the technical schemes of the present disclosure, and constitute a part of the description. The drawings and the embodiments of the present disclosure are used to illustrate the technical schemes of the present disclosure, and are not intended to limit the technical schemes of the present disclosure

FIG. 1 is a schematic diagram of an implementation environment according to an embodiment of the present disclosure;

FIG. 2 is a schematic diagram of a network architecture according to an embodiment of the present disclosure;

FIG. 3 is a schematic structural diagram of a driver assistance apparatus according to an embodiment of the present disclosure;

FIG. 4 is a schematic structural diagram of a vehicle-mounted terminal device according to an embodiment of the present disclosure;

FIG. 5 is a schematic structural diagram of a Road Side Unit (RSU) according to an embodiment of the present disclosure;

FIG. 6 is a schematic structural diagram of a decision server according to an embodiment of the present disclosure;

FIG. 7 is a schematic flowchart of a vehicle control method applied to a vehicle-mounted terminal device of a to-be-controlled vehicle according to an embodiment of the present disclosure;

FIG. 8 is a schematic flowchart of a vehicle control method applied to a vehicle-road coordination apparatus according to an embodiment of the present disclosure;

FIG. 9 is a schematic flowchart of a vehicle control method applied to a decision server according to an embodiment of the present disclosure;

FIG. 10 is a schematic diagram of an example of a traffic condition according to an embodiment of the present disclosure;

FIG. 11 is a schematic diagram of a processing process of a decision model according to an embodiment of the present disclosure;

FIG. 12 is a schematic diagram of another processing process of a decision model according to an embodiment of the present disclosure;

FIG. 13 is a schematic structural diagram of a decision server according to an embodiment of the present disclosure;

FIG. 14 is a schematic structural diagram of a vehicle-road coordination device according to an embodiment of the present disclosure; and

FIG. 15 is a schematic structural diagram of a vehicle-mounted terminal device according to an embodiment of the present disclosure.

## DETAILED DESCRIPTION

To make the objects, technical schemes, and advantages of the present disclosure clear, the present disclosure is described in further detail in conjunction with accompanying drawings and examples. It should be understood that the embodiments described herein are merely used for illustrating the present disclosure, and are not intended to limit the present disclosure.

In the description of the present disclosure, it should be understood that, terms such as "upper", "lower", and the like should be construed to refer to the orientation as then described or as shown in the drawings under discussion. These relative terms are for convenience of description and do not require that the present disclosure be constructed or operated in a particular orientation, therefore cannot be construed to limit the present disclosure.

It is to be noted, although functional modules have been divided in the schematic diagrams of apparatuses and logical orders have been shown in the flowcharts, in some cases, the modules may be divided in a different manner, or the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order. In the descriptions of the present disclosure, unless otherwise stated, "a plurality of' or "multiple" means two or more.

In the descriptions of the present disclosure, unless otherwise specifically limited, terms such as "mount" and "connect" shall be understood broadly. Those having ordinary skills in the art may reasonably determine, in conjunction with specific content of the technical schemes, specific meanings of the foregoing terms in the present disclosure.

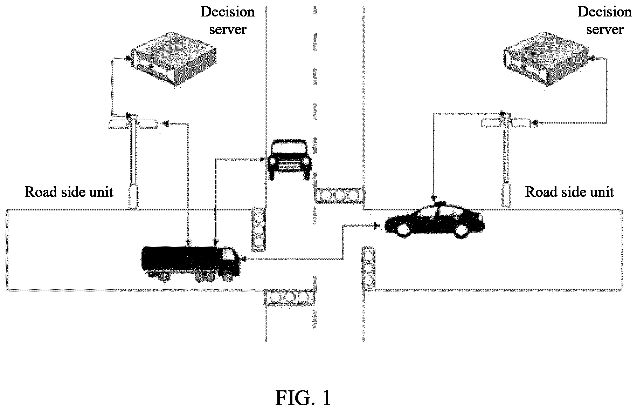

FIG. 1 is a schematic diagram of an implementation environment according to an embodiment of the present disclosure. The implementation environment includes:

1. Network-connected vehicles: All vehicles driving on a road are connected to a network, and communicate with other vehicles or devices by using vehicle-mounted terminal devices and an RSU. In addition, each vehicle is equipped with a driver assistance apparatus, to control behavior of the vehicle.

2. Traffic infrastructure devices: for example, traffic lights, which are also connected to the network.

3. Vehicle-road coordination device: for example, the RSU, which is also connected to the network. One or more vehicle-road coordination devices may be disposed in a same road section.

4. Decision server: A vehicle behavior decision server is disposed for each road section, to process collected traffic information and vehicle status information, use the information to calculate and make a decision when dangerous driving behavior occurs on the road, and control behavior of each vehicle within the road section using the driver assistance apparatus, to ensure traffic safety.

In addition, for vehicles that are not connected to the network on the road, information about these vehicles may be collected using devices such as a camera and a radar, and the information is processed and then added to the traffic information.

Bidirectional information transmission may be performed between vehicles, between a vehicle and the vehicle-road coordination device, between the traffic infrastructure devices, between the vehicle-road coordination device, the traffic infrastructure devices, and a decision server, and between decision servers. A manner of the information transmission includes, but not limited to, transmission via a wired or wireless network.

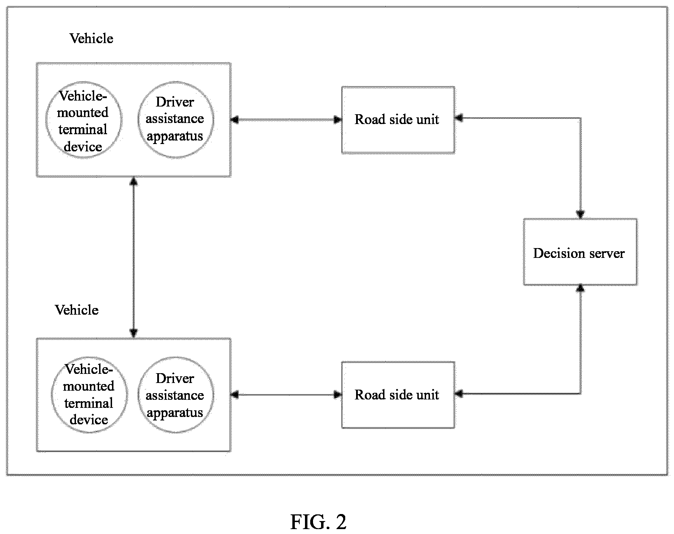

FIG. 2 is a schematic diagram of a network architecture according to an embodiment of the present disclosure. Devices involved in the network architecture include driver assistance apparatuses, vehicle-mounted terminal devices, RSUs in a road section, and a decision server in the road section.

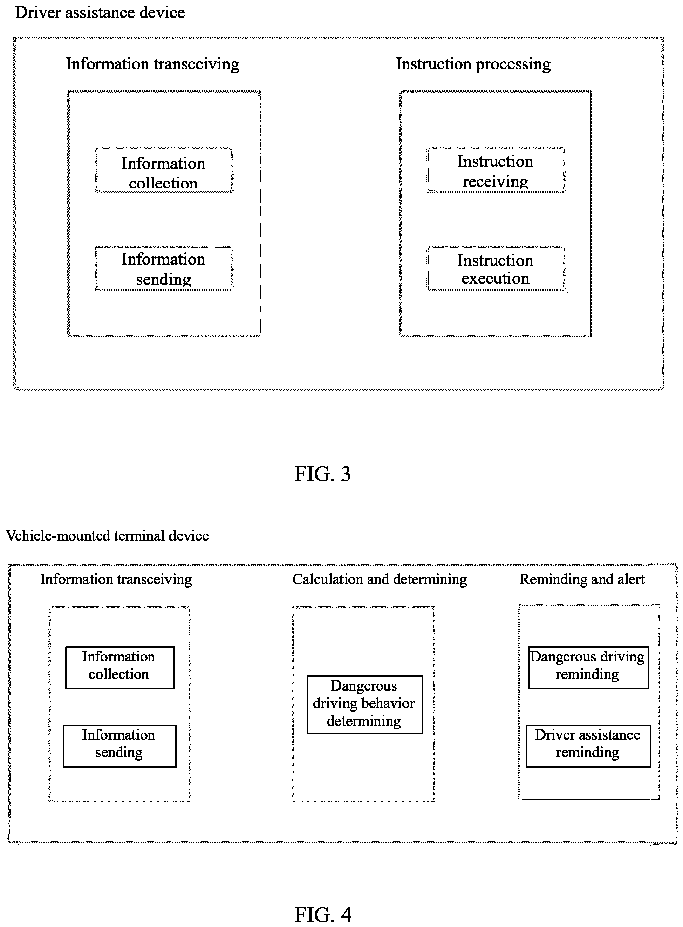

FIG. 3 is a schematic structural diagram of a driver assistance apparatus according to an embodiment of the present disclosure. The driver assistance apparatus includes an information transceiving module and an instruction processing module. The information transceiving module includes two parts. One part is an information collection function, configured to collect vehicle status information of a current vehicle, such as a vehicle driving speed, a vehicle acceleration, and a steering wheel angle. The other part is an information sending function, configured to send, to a vehicle-mounted terminal device, the information collected by the information collection function in a fixed format. The instruction processing module is configured to receive driving instructions, and control a vehicle driving system according to the received driving instructions, for example, execute deceleration instructions to decelerate a vehicle.

FIG. 4 is a schematic structural diagram of a vehicle-mounted terminal device according to an embodiment of the present disclosure. The vehicle-mounted terminal device includes an information transceiving module, a calculation and determining module, and a reminding and alert module. The information transceiving module includes an information receiving function and an information sending function. The information receiving function is configured to receive vehicle status information sent by a driver assistance apparatus, and traffic information and operation instruction information sent by an RSU. The information sending function is configured to send the vehicle status information and dangerous driving alert information to the RSU. The calculation and determining module is also a dangerous driving behavior determining function. This function determines, based on the vehicle status information and road restriction information, whether a current vehicle has an illegal driving behavior or a dangerous driving behavior, and generates dangerous driving alarm information. The reminding and alert module is configured to generate a voice reminder for a driver. Specifically, when the driver has dangerous driving behavior, the reminding and alert module will generate a voice reminder, to remind the driver to regulate the driving behavior. When receiving instruction information sent by the RSU, the reminding and alert module will generate a voice reminder, to remind the driver to enter a driver assistance mode. After the driver assistance mode ends, the reminding and alert module will also generate a voice reminder for the driver.

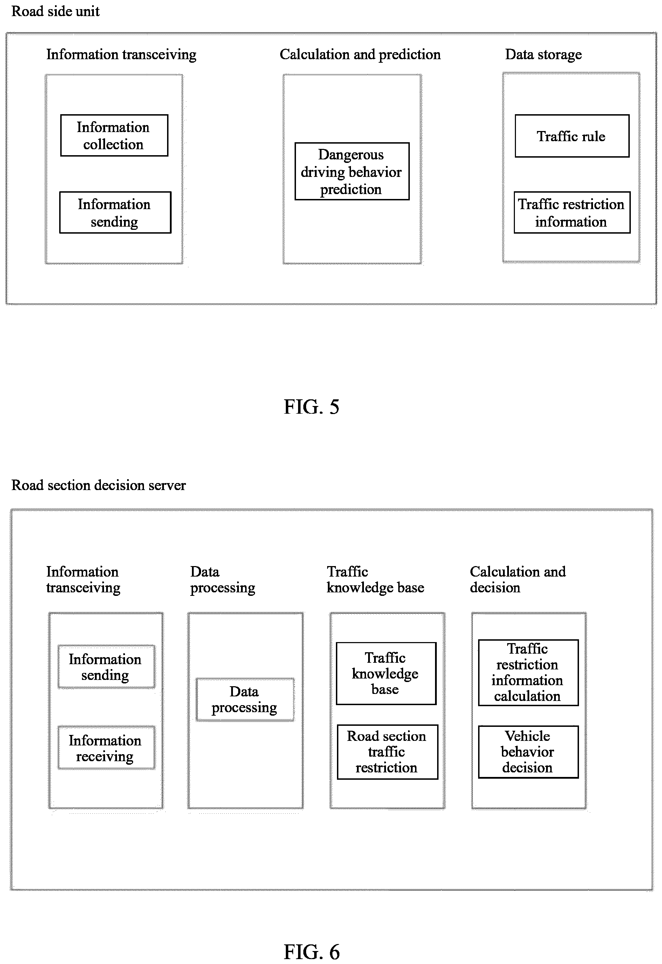

FIG. 5 is a schematic structural diagram of an RSU according to an embodiment of the present disclosure. The RSU includes an information transceiving module, a data storage module, and a calculation and prediction module. The information transceiving module includes an information collection function and an information sending function. The information collection function is configured to receive information sent by a vehicle within a coverage area, by a decision server in a road section, and by traffic infrastructure devices (such as traffic lights and cameras). The information sending function is configured to send vehicle status information and a calculation result of the calculation and prediction module to the decision server in the road section of the vehicle, and send road restriction information, operation instruction information, and a danger alert to the vehicle. The data storage module is configured to store a traffic rule and the road restriction information of the current road section. The calculation and prediction module predicts, using the collected vehicle status information, the traffic rule and the road restriction information, a probability that the vehicle within the coverage area has a dangerous driving behavior, and sends, to the decision server according to a preset threshold, an identity of a vehicle with a probability of dangerous driving behavior greater than or equal to the preset threshold.

FIG. 6 is a schematic structural diagram of a decision server according to an embodiment of the present disclosure. The decision server includes an information transceiving module, a data processing module, a data storage module, and a calculation and decision module. The information transceiving module also includes an information collection function and an information sending function. The information receiving function is configured to receive reference information sent by an RSU and another decision server. The reference information sent by the RSU is vehicle status information within a current road section, dangerous driving behavior pre-warning information, or dangerous driving behavior alarm information. The information sent by the another decision server is mainly driving information of a vehicle that enters a coverage area of a current decision server from a coverage area of the another decision server at a junction of the two coverage areas. The information sending function is configured to: send, to the RSU, road restriction information of the current road section such as speed limit information, which is obtained by the calculation and decision module; and send, to the RSU, operation instruction information that is obtained by the calculation and decision module through calculation when dangerous driving behavior exists within the road section. The data processing module is configured to process data such as traffic information received from various sources, and perform normalization processing on the received data, including a series of operations such as removing redundant data and normalizing a data format. Data stored in the data storage module includes a road traffic rule knowledge base, the road restriction information of the current road section, and historical dangerous driving behavior decision record information. The road restriction information is obtained through calculation by the calculation and decision module according to factors such as traffic rule information, the vehicle status information of the current road section, and a current weather condition. The historical dangerous driving behavior decision record information refers to a dangerous driving behavior scenario that has occurred within the current road section and corresponding operation instruction information. The calculation and decision module is configured to: obtain through calculation, according to the traffic rule information of the road section, the vehicle status information of the current road section, and the current weather condition, other road restriction information such as a speed limit of the road section in a current status, and perform calculation based on the vehicle status information within the road section and the traffic rule information when a vehicle has a dangerous driving behavior within the road section, make a decision on the behavior of the vehicle within the road section in the current dangerous status, consider all vehicles within the road section, coordinate driving behavior of the vehicles, which mainly refers to adjustment of a vehicle speed, and obtain operation instruction information for each vehicle, to avoid a traffic accident.

This embodiment of the present disclosure is applied to a vehicle-road coordination scenario. By default, each vehicle driving on a road is connected to a network, and may communicate with an RSU and another vehicle. In this embodiment of the present disclosure, a road is divided into several road sections, and one decision server and several RSUs are deployed in each road section. The decision server and the RSUs form fixed devices in this embodiment of the present disclosure, and are deployed at proper locations on the road. In addition, each vehicle driving on the road is equipped with a vehicle-mounted terminal device and a driver assistance device. The foregoing decision server, the RSUs, the vehicle-mounted terminal device, and the driver assistance device perform efficient information communication with each other using a unified communications protocol.

A road section covered by a single decision server is taken as an example below to describe a vehicle control method according to an embodiment of the present disclosure.

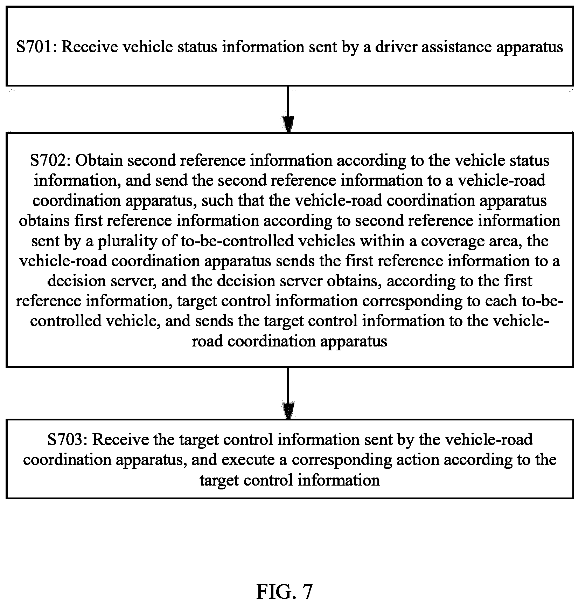

FIG. 7 is a flowchart of a vehicle control method applied to a vehicle-mounted terminal device of a to-be-controlled vehicle according to an embodiment of the present disclosure. The vehicle control method includes, but not limited to, the following steps 701 to 703.

At step 701, vehicle status information sent by a driver assistance apparatus is received.

At step 702, second reference information is obtained according to the vehicle status information, and the second reference information is sent to a vehicle-road coordination apparatus, such that the vehicle-road coordination apparatus obtains first reference information according to second reference information sent by a plurality of to-be-controlled vehicles within a coverage area, the vehicle-road coordination apparatus sends the first reference information to a decision server, and the decision server obtains, according to the first reference information, target control information corresponding to each to-be-controlled vehicle, and sends the target control information to the vehicle-road coordination apparatus.

At step 703, the target control information sent by the vehicle-road coordination apparatus is received, and a corresponding action is executed according to the target control information.

The vehicle-road coordination apparatus may be an RSU, and the second reference information includes at least one of vehicle status information or dangerous driving alarm information. That is, the second reference information is obtained according to the vehicle status information. The vehicle status information may be used as the second reference information, or the dangerous driving alarm information is generated according to the vehicle status information, and the vehicle status information and the dangerous driving alarm information are used as the second reference information. That the dangerous driving alarm information is generated according to the vehicle status information may be that the dangerous driving alarm information is generated according to the vehicle status information and first road restriction information.

In an embodiment, the vehicle status information includes information such as a vehicle speed, an acceleration, a distance from an adjacent vehicle, etc. After collecting the vehicle status information, the driver assistance apparatus sends the vehicle status information to the vehicle-mounted terminal device. The vehicle-mounted terminal device forwards the vehicle status information to the RSU. The RSU further processes received vehicle status information of several vehicles, and then sends the vehicle status information to the decision server within a road section. The decision server further integrates the received vehicle status information sent by the RSU, to obtain overall traffic information of the current road section.

In addition, after receiving the vehicle status information sent by the driver assistance apparatus, the vehicle-mounted terminal device may determine, according to the vehicle status information, whether a current to-be-controlled vehicle has a dangerous driving behavior. If the current to-be-controlled vehicle has a dangerous driving behavior, the vehicle-mounted terminal device generates corresponding dangerous driving alarm information, and sends the dangerous driving alarm information to the RSU. The RSU forwards the dangerous driving alarm information to the decision server. After receiving the dangerous driving alarm information, the decision server enters a dangerous driving behavior processing procedure, to generate corresponding operation instruction information.

In an embodiment, when the second reference information sent by the vehicle-mounted terminal device to the RSU includes only the vehicle status information, correspondingly, the target control information sent by the RSU is received as the first road restriction information, and the first road restriction information may be speed limit information. When the second reference information sent by the vehicle-mounted terminal device to the RSU includes both the vehicle status information and the dangerous driving alarm information, correspondingly, the target control information sent by the RSU is received as the operation instruction information. Therefore, when the target control information includes the first road restriction information, a corresponding action is executed according to the target control information, which may be updating a generation condition of the dangerous driving alarm information according to the first road restriction information. When the target control information includes target operation instruction information, a corresponding action is executed according to the target operation instruction information, which may be controlling the driver assistance apparatus to execute a corresponding action according to the target operation instruction information.

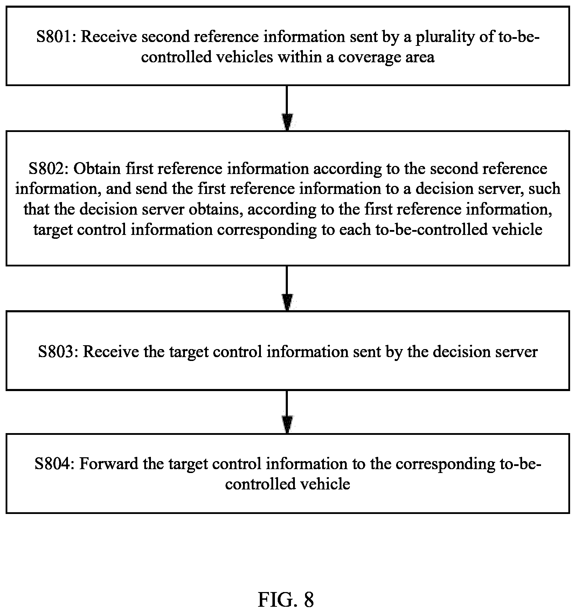

FIG. 8 is a flowchart of a vehicle control method applied to a vehicle-road coordination apparatus according to an embodiment of the present disclosure. The vehicle control method includes, but not limited to, the following steps 801 to 803.

At step 801, second reference information sent by a plurality of to-be-controlled vehicles within a coverage area is received.

At step 802, first reference information is obtained according to the second reference information, and the first reference information is sent to a decision server, such that the decision server obtains, according to the first reference information, target control information corresponding to each to-be-controlled vehicle.

At step 803, the target control information sent by the decision server is received.

At step 804, the target control information is forwarded to the corresponding to-be-controlled vehicle.

The second reference information is obtained based on vehicle status information of the to-be-controlled vehicle, and the second reference information may be the vehicle status information, or may be the vehicle status information and dangerous driving warning information.

The first reference information may be traffic information within a road section, or may be the traffic information and dangerous driving pre-warning information within the road section. In an embodiment, when the first reference information is the traffic information within the road section, the vehicle-road coordination apparatus may obtain the traffic information according to the vehicle status information of the plurality of to-be-controlled vehicles. When the first reference information is the traffic information within the road section and the dangerous driving pre-warning information, in addition to obtaining the traffic information in the foregoing manner, the vehicle-road coordination apparatus may further determine, according to the vehicle status information of the plurality of to-be-controlled vehicles, a probability that each to-be-controlled vehicle has a dangerous driving behavior, and determines a to-be-controlled vehicle with a probability greater than or equal to a preset threshold as a dangerous vehicle, generate a dangerous vehicle identity for the dangerous vehicle, and generate the dangerous driving pre-warning information according to the dangerous vehicle identity.

In addition, when the second reference information includes the dangerous driving warning information, the traffic information and the dangerous driving warning information may also be used as the first reference information.

That is, the vehicle-road coordination apparatus sends at least the traffic information within the road section to the decision server. When receiving dangerous driving alarm information sent by a vehicle-mounted terminal device, the vehicle-road coordination apparatus sends the vehicle status information and the dangerous driving alarm information to the decision server as first reference information. When receiving only the vehicle status information sent by the vehicle-mounted terminal device, the vehicle-road coordination apparatus generates the traffic information according to the vehicle status information, sends the traffic information to the decision server as the first reference information, or further generates the dangerous driving pre-warning information according to the vehicle status information, and sends the traffic information and the dangerous driving pre-warning information to the decision server as the first reference information.

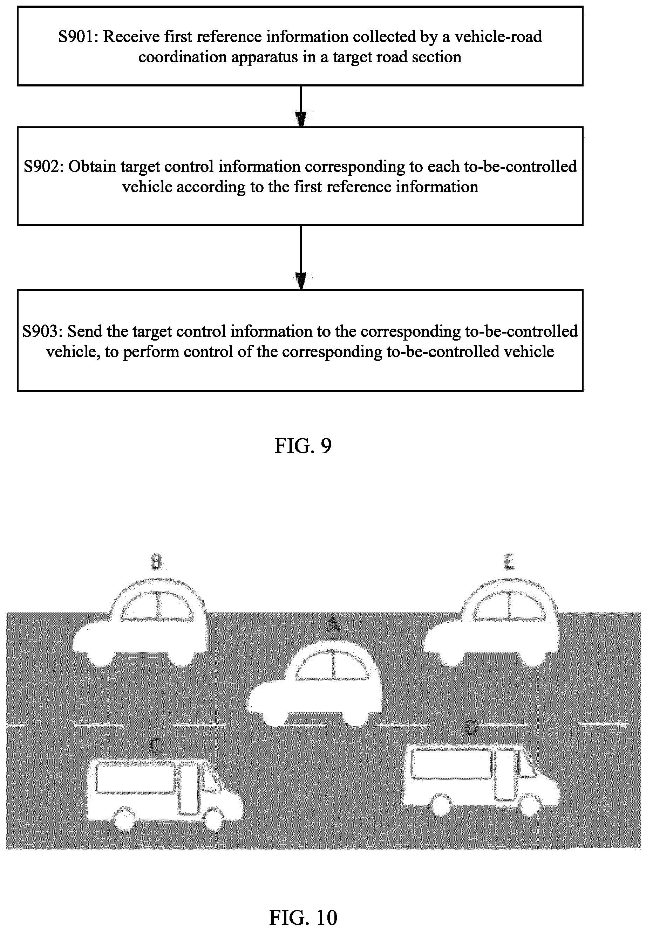

FIG. 9 is a flowchart of a vehicle control method applied to a decision server according to an embodiment of the present disclosure. The vehicle control method includes, but not limited to, the following steps 901 to 903.

At step 901, first reference information collected by a vehicle-road coordination apparatus in a target road section is received.

At step 902, target control information corresponding to each to-be-controlled vehicle is obtained according to the first reference information.

At step 903, the target control information is sent to the corresponding to-be-controlled vehicle, to perform control of the corresponding to-be-controlled vehicle.

The first reference information is obtained based on vehicle status information of a plurality of to-be-controlled vehicles within a coverage area of the vehicle-road coordination apparatus, and the first reference information includes the following several cases.

Case one:

The first reference information includes only traffic information. In this case, the target control information corresponding to each to-be-controlled vehicle is obtained according to the first reference information. In an embodiment, first road restriction information of the target road section may be obtained according to the traffic information, and the first road restriction information is used as the target control information corresponding to each to-be-controlled vehicle.

For the received traffic information, the decision server performs integrated processing on the traffic information sent by a plurality of RSUs within the coverage area to remove redundant data, and obtains overall traffic information within the target road section in which the decision server is located. Then, the first road restriction information of the target road section can be obtained through calculation according to the overall traffic information and in combination with related information such as a traffic rule knowledge base and a weather condition. The first road restriction information takes effect on all the to-be-controlled vehicles in the target road section. The first road restriction information may be speed limit information of the target road section. After the first road restriction information is forwarded to a vehicle-mounted terminal device by the vehicle-road coordination apparatus, the vehicle-mounted terminal device can update a generation condition of dangerous driving alarm information according to the first road restriction information.

Case two:

The first reference information includes traffic information and dangerous driving pre-warning information. In this case, the target control information corresponding to each to-be-controlled vehicle is obtained according to the first reference information. In an embodiment, a first target vehicle may be determined from the to-be-controlled vehicles according to the dangerous driving pre-warning information, first vehicle status information of the first target vehicle and second vehicle status information of a vehicle adjacent to the first target vehicle are extracted from the traffic information, second road restriction information of a road on which the first target vehicle is currently located is obtained according to the traffic information, and first operation instruction information of the first target vehicle and second operation instruction information of the vehicle adjacent to the first target vehicle are obtained according to the first vehicle status information, the second vehicle status information, and the second road restriction information.

That the first target vehicle is determined from the to-be-controlled vehicles according to the dangerous driving pre-warning information may be that a vehicle identity corresponding to the dangerous driving pre-warning information is determined, and the first target vehicle is determined from the to-be-controlled vehicles according to the vehicle identity.

In an embodiment, that the first operation instruction information of the first target vehicle and the second operation instruction information of the vehicle adjacent to the first target vehicle are obtained according to the first vehicle status information, the second vehicle status information, and the second road restriction information may be that a first status matrix is obtained according to the first vehicle status information and the second vehicle status information, a second status matrix is obtained according to the second road restriction information, the first status matrix and the second status matrix are input into a decision model, to obtain an operation instruction matrix, and the first operation instruction information of the first target vehicle and the second operation instruction information of the vehicle adjacent to the first target vehicle are obtained according to the operation instruction matrix.

For example, FIG. 10 is a schematic diagram of an example of a traffic condition according to an embodiment of the present disclosure. A first target vehicle may be a vehicle A, and vehicles adjacent to the first target vehicle are a vehicle B, a vehicle C, a vehicle D, and a vehicle E. The vehicle B and the vehicle E drive in a same direction as the vehicle A, and the vehicle C, the vehicle D and the vehicle A drive in a direction opposite the vehicle A. Vehicle status information may include information such as a driving speed $x1$, an acceleration $x2$, a driving direction $x3$, a steering wheel angle $x4$, lane information $x5$, positioning information $x6$, a vehicle size $x7$, a vehicle weight $x8$, and a vehicle identity $x9$. Therefore, a vector [x1, x2, x3, x4, x5, x6, x7, x8, and x9] may be used to indicate a current driving status of a vehicle.

A decision model adopting a neural network-based decision algorithm will be taken as an example below to describe a principle of generating first operation instruction information and second operation instruction information.

A decision server performs a series of data processing (including, but not limited to, operations such as data cleaning, data fusion, and normalization processing) using collected information, to obtain a first status matrix M1 of the first target vehicle and the vehicles adjacent to the first target vehicle. In addition, the decision server obtains a second status matrix M2 according to second road restriction information of a current road.

$$M1 = \begin{bmatrix} Ax1 & Ax2 & Ax3 & Ax4 & Ax5 & Ax6 & Ax7 & Ax8 & Ax9 \\ Bx1 & Bx2 & Bx3 & Bx4 & Bx5 & Bx6 & Bx7 & Bx8 & Bx9 \\ Cx1 & Cx2 & Cx3 & Cx4 & Cx5 & Cx6 & Cx7 & Cx8 & Cx9 \\ Dx1 & Dx2 & Dx3 & Dx4 & Dx5 & Dx6 & Dx7 & Dx8 & Dx9 \\ Ex1 & Ex2 & Ex3 & Ex4 & Ex5 & Ex6 & Ex7 & Ex8 & Ex9 \end{bmatrix}$$

$$M2 = \begin{bmatrix} Az \\ Bz \\ Cz \\ Dz \\ Ez \end{bmatrix}.$$

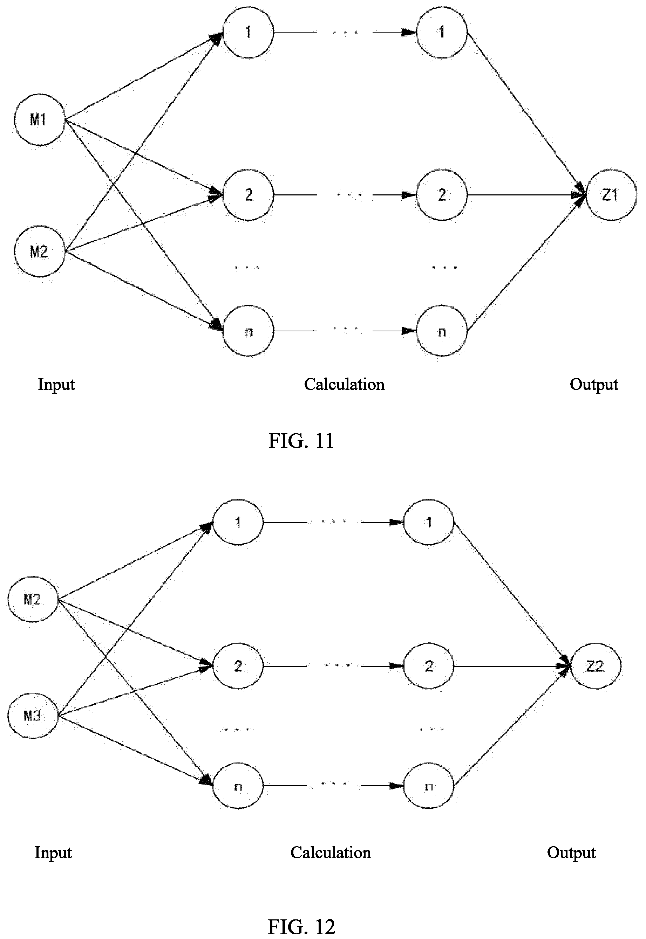

FIG. 11 is a schematic diagram of a processing process of a decision model according to an embodiment of the present disclosure. M1 and M2 are used as input data of the decision model, and are processed by the decision model, to obtain an operation instruction matrix Z1 of a first target vehicle and a vehicle adjacent to the first target vehicle. Az indicates operation instruction information for the vehicle A that is obtained by a decision server through calculation for a current dangerous driving situation. Other data is similar to Az, and indicates operation instruction information for other vehicles. That is, first operation instruction information of the first target vehicle and second operation instruction information of the vehicle adjacent to the first target vehicle can be obtained according to the operation instruction matrix.

Through the foregoing step, the first operation instruction information of the first target vehicle and the second operation instruction information of the vehicle adjacent to the first target vehicle are obtained. To make vehicle control in a target road section more effective and avoid a traffic accident, a vehicle adjacent to the vehicle adjacent that is to the first target vehicle may further be controlled. In an embodiment, the vehicle adjacent to the first target vehicle may be used as a second target vehicle, third vehicle status information of the second target vehicle after a driving status is adjusted according to the second operation instruction information is obtained, fourth vehicle status information of a vehicle adjacent to the second target vehicle is extracted from traffic information, and third operation instruction information of the vehicle adjacent to the second target vehicle is obtained according to the third vehicle status information, the fourth vehicle status information, and second road restriction information.

In an embodiment, the third operation instruction information may also be generated using the foregoing decision model. In the foregoing example, when a decision algorithm is performed for the second time, vehicle status information, that is, a third status matrix M3, of the vehicle B, the vehicle C, the vehicle D, the vehicle E, and vehicles adjacent to the vehicle B, the vehicle C, the vehicle D, the vehicle E, and the foregoing second status matrix M2, are input to the decision model.

$$M3 = \begin{bmatrix} m(B) \\ m(C) \\ m(D) \\ m(E) \\ m(1) \\ m(2) \\ m(3) \\ m(4) \\ \dots \\ m(n) \end{bmatrix}$$

where M(B) to m(E) indicate vehicle status information of the vehicle B, the vehicle C, the vehicle D, and the vehicle E obtained after adjustment, and m(1) to m(n) indicate vehicle status information of vehicles adjacent to the vehicle B, the vehicle C, the vehicle D, and the vehicle E.

FIG. 12 is a schematic diagram of another processing process of a decision model according to an embodiment of the present disclosure. An operation instruction matrix Z2 of third operation instruction information of vehicles adjacent to a vehicle B, a vehicle C, a vehicle D, and a vehicle E is obtained through calculation. The current calculation result Z2 does not include operation instruction information of the vehicle B, the vehicle C, the vehicle D, and the vehicle E, but includes only operation instruction information of the vehicles adjacent to the vehicle B, the vehicle C, the vehicle D, and the vehicle E. Z(1) to z(n) indicate operation instruction information of a vehicle adjacent to the vehicle B, the vehicle C, the vehicle D, or the vehicle E.

$$Z2 = \begin{bmatrix} Z(1) \\ Z(2) \\ Z(3) \\ Z(4) \\ \dots \\ Z(n) \end{bmatrix}.$$

It can be understood that, after obtaining the third operation instruction information, the third operation instruction information may be further diffused layer by layer until a calculation result indicates that all adjacent vehicles do not need to perform any operation. For example, whether an adjacent vehicle needs to perform an operation is determined by a calculation result of the decision model. When a vector represented by a calculation result of an adjacent vehicle is 0, it indicates that the vehicle may continue driving without performing any operation.

In this embodiment of the present disclosure, all vehicle status information and all operation instruction information include vehicle identity information. A vehicle to which current vehicle status information belongs and a vehicle to which a current vehicle operation instruction should be sent can be determined using the vehicle identity information. An RSU accurately sends the operation instruction information to the corresponding vehicle according to the vehicle identity information, and a vehicle-mounted terminal device of the corresponding vehicle receives the operation instruction information.

After the calculation ends, the corresponding operation instruction information is sent to the vehicle-mounted terminal device of the corresponding vehicle according to the vehicle identity information included in the calculation result, and the vehicle-mounted terminal device operates, according to the operation instruction information, a driver assistance apparatus to execute corresponding operation instructions. The operation instruction information obtained through calculation includes, but not limited to, adjustment and control of statuses, such as a driving speed and a driving lane.

The foregoing decision model based on a neural network is only used to describe an implementation procedure of this embodiment of the present disclosure, and does not indicate a decision algorithm finally used in this scheme. In this embodiment of the present disclosure, a decision algorithm used may be flexibly determined according to an actual application scenario, including, but not limited to, a rule-based decision algorithm, a neural network-based decision algorithm, and the like.

Case three:

The first reference information includes traffic information, dangerous driving pre-warning information, and dangerous driving alarm information. In this case, target control information corresponding to each to-be-controlled vehicle is obtained according to the first reference information. In an embodiment, a third target vehicle may be determined from the to-be-controlled vehicles according to the dangerous driving alarm information, a first traffic scenario corresponding to the dangerous driving pre-warning information is determined, a second traffic scenario corresponding to the dangerous driving alarm information is determined, and fourth operation instruction information of the third target vehicle and fifth operation instruction information of a vehicle adjacent to the third target vehicle is obtained according to consistency between the first traffic scenario and the second traffic scenario.

A traffic scenario is used to represent a current vehicle driving situation, for example, is used to describe a quantity of vehicles on a road, a vehicle speed, a distance between vehicles, and the like.

In an embodiment, when the first traffic scenario is consistent with the second traffic scenario, pre-warning operation instruction information that is generated in advance according to the traffic information and the dangerous driving pre-warning information can be obtained, and the fourth operation instruction information of the third target vehicle and the fifth operation instruction information of the vehicle adjacent to the third target vehicle are obtained according to the pre-warning operation instruction information. The pre-warning operation instruction information generated in advance according to the traffic information and the dangerous driving pre-warning information, that is, the operation instruction information described in the foregoing case two, will not be described herein again. In a case where the first traffic scenario is consistent with the second traffic scenario, the fourth operation instruction information of the third target vehicle and the fifth operation instruction information of the vehicle adjacent to the third target vehicle are obtained according to the pre-warning operation instruction information. This reduces an amount of data calculation and improves calculation efficiency.

When the first traffic scenario is inconsistent with the second traffic scenario, the fourth operation instruction information of the third target vehicle and the fifth operation instruction information of the vehicle adjacent to the third target vehicle may be generated according to the traffic information and the dangerous driving alarm information. For a specific manner of generating the fourth operation instruction information and the fifth operation instruction information, reference may be made to the manner of generating the operation instruction information described in detail in case two. Details are not described herein again.

It can be understood that, in addition to the foregoing three cases, the first reference information may also include traffic information and dangerous driving alarm information. In this case, because there is no operation instruction information generated in advance according to the traffic information and the dangerous driving pre-warning information, the fourth operation instruction information and the fifth operation instruction information may be directly generated according to the traffic information and the dangerous driving alarm information.

In an embodiment, the decision server sends target control information to a corresponding to-be-controlled vehicle. In an embodiment, the target control information may be sent to a vehicle-road coordination apparatus corresponding to the to-be-controlled vehicle, such that the vehicle-road coordination apparatus forwards the target control information to the corresponding to-be-controlled vehicle. This reduces a burden on the decision server.

According to the vehicle control method provided in this embodiment of the present disclosure, first reference information collected by a vehicle-road coordination apparatus in a target road section is received, where the first reference information is obtained based on vehicle status information of a plurality of to-be-controlled vehicles within a coverage area of the vehicle-road coordination apparatus. Target control information corresponding to each to-be-controlled vehicle is determined according to the first reference information, and the target control information is sent to the corresponding to-be-controlled vehicle, to perform control of the to-be-controlled vehicle. That is, in the vehicle control method provided in this embodiment of the present disclosure, a unified decision is made on the plurality of to-be-controlled vehicles by collecting vehicle status information of the plurality of to-be-controlled vehicles within the target road section, and actions of the to-be-controlled vehicles are coordinated and controlled. Compared with a manner of performing control of only a single vehicle, the method of the the present disclosure improves accuracy of vehicle control, avoids collisions, and improves driving safety.

It can be understood that, although the steps in the foregoing flowcharts are sequentially displayed according to an indication of an arrow, these steps are not necessarily executed in a sequence indicated by the arrow. Unless explicitly stated in this embodiment, these steps are not strictly performed in the sequence, and may be performed in another sequence. In addition, at least some of the steps in the foregoing flowcharts may include a plurality of steps or a plurality of phases. These steps or phases are not necessarily executed at a same moment, but may be executed at different moments. These steps or phases are not executed sequentially, but may be executed in turn or alternately with other steps or at least some of steps or phases in other steps.

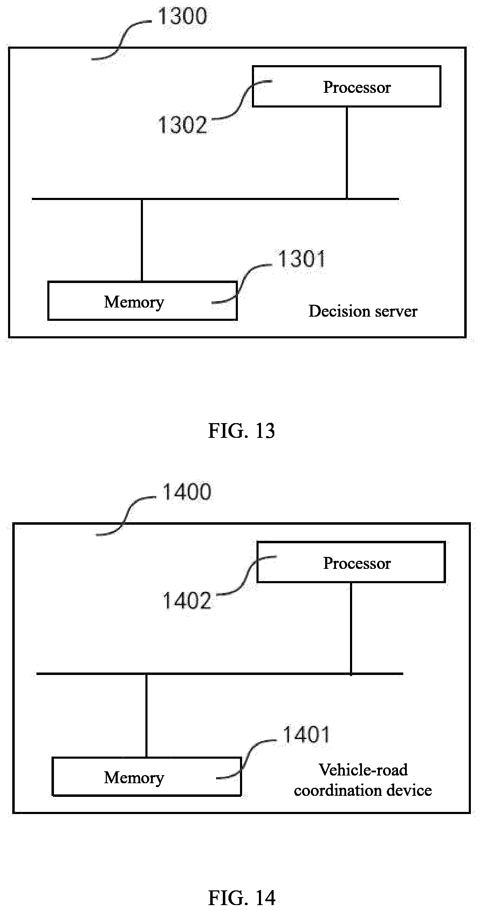

FIG. 13 is a schematic structural diagram of a decision server according to an embodiment of the present disclosure. The decision server 1300 includes a memory 1301, a processor 1302, and a computer program stored in the memory 1301 and runnable on the processor 1302, where the computer program, when executed by the processor 1302, causes the processor 1302 to implement the foregoing vehicle control method.

The processor 1302 and the memory 1301 may be connected by a bus or in other ways.

As a non-transient computer-readable storage medium, the memory 1301 may be configured to store a non-transient software program and a non-transient computer-executable program, for example, the vehicle control method according to embodiments of the present disclosure. The processor 1302 executes a non-transient software program and instructions stored in the memory 1301 to implement the foregoing vehicle control method.

The memory 1301 may include a program storage area and a data storage area. The program storage area may store an Operating System (OS) and an application program required by at least one function. The data storage area may store data used to execute the foregoing vehicle control method. In addition, the memory 1301 may include a high-speed Random Access Memory (RAM) 1301, and may further include a non-transient memory 1301, such as at least one storage device, a storage device, a flash memory device, or another non-transient solid-state storage device. In some implementations, the memory 1301 may optionally include a memory 1301 remotely arranged relative to the processor 1302, which may be connected to the decision server 1300 via a network. Examples of the foregoing network include, but not limited to, the Internet, an intranet, a Local Area Network (LAN), a mobile communications network, and combinations thereof.

A non-transient software program and instructions required to implement the foregoing vehicle control method are stored in the memory 1301 which, when executed by one or more processors 1302, cause the one or more processors 1302 to implement the foregoing vehicle control method.

FIG. 14 is a schematic structural diagram of a vehicle-road coordination device according to an embodiment of the present disclosure. The vehicle-road coordination device 1400 includes a memory 1401, a processor 1402, and a computer program stored in the memory 1401 and runnable on the processor 1402 which, when executed by the processor 1402, causes the processor 1402 to implement the foregoing vehicle control method.

The processor 1402 and the memory 1401 may be connected via a bus or in other ways.

As a non-transient computer-readable storage medium, the memory 1401 may be configured to store a non-transient software program and a non-transient computer-executable program, for example, the vehicle control method according to embodiments of the present disclosure. The processor 1402 executes a non-transient software program and instructions stored in the memory 1401 to implement the foregoing vehicle control method.

The memory 1401 may include a program storage area and a data storage area. The program storage area may store an OS and an application program required by at least one function. The data storage area may store data used to execute the foregoing vehicle control method. In addition, the memory 1401 may include a high-speed RAM 1401, and may further include a non-transient memory 1401, such as at least one storage device, a storage device, a flash memory device, or another non-transient solid-state storage device. In some implementations, the memory 1401 may optionally include a memory 1401 remotely arranged relative to the processor 1402, which may be connected to the vehicle-road coordination device 1400 via a network. Examples of the foregoing network include, but are not limited to, the Internet, an intranet, a LAN, a mobile communications network, and combinations thereof.

A non-transient software program and instructions required to implement the foregoing vehicle control method are stored in the memory 1401 which, when executed by one or more processors 1402, cause the one or more processors 1402 to implement the foregoing vehicle control method.

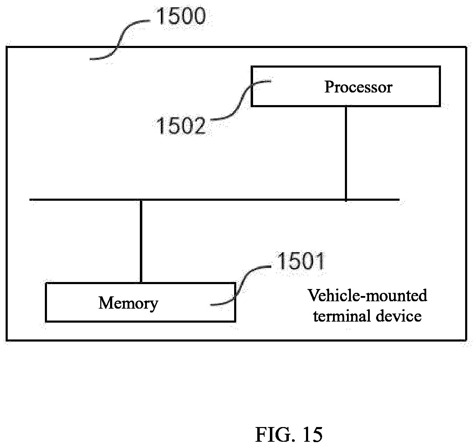

FIG. 15 is a schematic structural diagram of a vehicle-mounted terminal device according to an embodiment of the present disclosure. The vehicle-mounted terminal device 1500 includes a memory 1501, a processor 1502, and a computer program stored in the memory 1501 and runnable on the processor 1502 which, when executed by the processor 1502, causes the processor 1502 to implement the foregoing vehicle control method.

The processor 1502 and the memory 1501 may be connected via a bus or in other ways.

As a non-transient computer-readable storage medium, the memory 1501 may be configured to store a non-transient software program and a non-transient computer-executable program, for example, the vehicle control method according to embodiments of the present disclosure. The processor 1502 executes a non-transient software program and instructions stored in the memory 1501 to implement the foregoing vehicle control method.

The memory 1501 may include a program storage area and a data storage area. The program storage area may store an OS and an application program required by at least one function. The data storage area may store data used to execute the foregoing vehicle control method. In addition, the memory 1501 may include a high-speed RAM 1501, and may further include a non-transient memory 1501, such as at least one storage device, a storage device, a flash memory device, or another non-transient solid-state storage device. In some implementations, the memory 1501 may optionally include a memory 1501 remotely arranged relative to the processor 1502, which may be connected to the vehicle-mounted terminal device 1500 via a network. Examples of the foregoing network include, but are not limited to, the Internet, an intranet, a LAN, a mobile communications network, and combinations thereof.

A non-transient software program and instructions required to implement the foregoing vehicle control method are stored in the memory 1501 which, when executed by one or more processors 1502, cause the one or more processors 1502 to implement the foregoing vehicle control method.

An embodiment of the present disclosure provides a computer-readable storage medium, storing a computer-executable instruction which, when executed by a processor, causes the processor to implement the foregoing vehicle control method.

In an embodiment, the computer-readable storage medium stores a computer-executable instruction which, when executed by one or more control processors, causes the one or more control processors to implement the foregoing vehicle control method.

The described apparatus embodiments are merely illustrative. Units described as separate parts may be or may not be physically separate, i.e., they may be located in one place, or may be distributed on a plurality of network units. Some or all of the modules may be selected according to an actual need to implement the objectives of the schemes in the embodiments of the present disclosure.

Embodiments of the present disclosure have at least the following beneficial effects. First reference information collected by a vehicle-road coordination apparatus in a target road section is received, where the first reference information is obtained based on vehicle status information of a plurality of to-be-controlled vehicles within a coverage area of the vehicle-road coordination apparatus. Target control information corresponding to each to-be-controlled vehicle is determined according to the first reference information, and the target control information is sent to the corresponding to-be-controlled vehicle, to perform control of the to-be-controlled vehicle. That is, in the vehicle control method provided in the embodiments of the present disclosure, a unified decision is made on the plurality of to-be-controlled vehicles by collecting vehicle status information of the plurality of to-be-controlled vehicles within the target road section, and actions of the to-be-controlled vehicles are coordinated and controlled. Compared with a manner of performing control of only a single vehicle, the method of the the present disclosure improves accuracy of vehicle control, avoids collisions, and improves driving safety.

Those having ordinary skills in the art may understand that all or some steps and systems in the methods disclosed in the foregoing may be implemented as software, firmware, hardware, and appropriate combinations thereof. Some physical components or all physical components may be implemented as software executed by a processor, such as a Central Processing Unit (CPU), a Digital Signal Processor (DSP), or a microprocessor, or implemented as hardware, or implemented as an Integrated Circuit (IC), such as an Application-Specific Integrated Circuit (ASIC). Such software may be distributed on a computer-readable medium. The computer-readable medium may include a computer storage medium (or a non-temporary medium) and a communications medium (or a temporary medium). As is known to htose having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, a RAM, a Read-Only Memory (ROM), an Electrically Erasable Programmable Read-Only Memory (EEPROM), a flash memory or other memory technology, a Compact Disc Read-Only Memory (CD-ROM), a Digital Versatile Disc (DVD) or other optical storage, a cassette, a magnetic tape, a magnetic disk storage or other magnetic storage device, or any other medium which can be used to store the desired information and can be accessed by a computer. In addition, as is known to those having ordinary skills in the art, the communication medium typically includes computer-readable instructions, data structures, program modules, or other data in a modulated data signal such as a carrier or other transport mechanism, and can include any information delivery medium

It should be further understood that various implementations provided in embodiments of the present disclosure may be randomly combined to implement different technical effects.

The foregoing describes some implementations of the present disclosure. However, the present disclosure is not limited to the foregoing implementations, and those having ordinary skills in the art may make various equivalent modifications or replacements without departing from the essence of the present disclosure. These equivalent modifications or replacements are all included within the scope of the claims of the present disclosure.

## Claims

1. A vehicle control method, comprising:

    receiving first reference information collected by a vehicle-road coordination apparatus in a target road section, wherein the first reference information is obtained based on vehicle status information of a plurality of to-be-controlled vehicles within a coverage area of the vehicle-road coordination apparatus;
    determining, according to the first reference information, target control information corresponding to each to-be-controlled vehicle; and
    sending the target control information to the corresponding to-be-controlled vehicle, to perform control of the corresponding to-be-controlled vehicle.

2. The vehicle control method of claim 1, wherein the first reference information comprises traffic information, and determining, according to the first reference information, target control information corresponding to each to-be-controlled vehicle comprises:

    obtaining first road restriction information of the target road section according to the traffic information; and
    using the first road restriction information as the target control information corresponding to each to-be-controlled vehicle.

3. The vehicle control method of claim 1, wherein the first reference information comprises traffic information and dangerous driving pre-warning information, the target control information comprises operation instruction information, and determining, according to the first reference information, target control information corresponding to each to-be-controlled vehicle comprises:

    determining a first target vehicle from the plurality of to-be-controlled vehicles according to the dangerous driving pre-warning information;

extracting first vehicle status information of the first target vehicle and second vehicle status information of a vehicle adjacent to the first target vehicle from the traffic information;

obtaining, according to the traffic information, second road restriction information of a road on which the first target vehicle is currently located; and

obtaining first operation instruction information of the first target vehicle and second operation instruction information of the vehicle adjacent to the first target vehicle according to the first vehicle status information, the second vehicle status information, and the second road restriction information.

4. The vehicle control method of claim 3, wherein obtaining first operation instruction information of the first target vehicle and second operation instruction information of the vehicle adjacent to the first target vehicle according to the first vehicle status information, the second vehicle status information, and the second road restriction information comprises:

obtaining a first status matrix according to the first vehicle status information and the second vehicle status information;

obtaining a second status matrix according to the second road restriction information;

inputting the first status matrix and the second status matrix into a decision model, to obtain an operation instruction matrix; and

obtaining the first operation instruction information of the first target vehicle and the second operation instruction information of the vehicle adjacent to the first target vehicle according to the operation instruction matrix.

5. The vehicle control method of claim 3 or 4, further comprising:

taking the vehicle adjacent to the first target vehicle as a second target vehicle, and obtaining third vehicle status information of the second target vehicle after a driving status is adjusted according to the second operation instruction information;

extracting fourth vehicle status information of a vehicle adjacent to the second target vehicle from the traffic information; and

obtaining third operation instruction information of the vehicle adjacent to the second target vehicle according to the third vehicle status information, the fourth vehicle status information, and the second road restriction information.

6. The vehicle control method of claim 1, wherein the first reference information comprises dangerous driving pre-warning information and dangerous driving alarm information, the target control information comprises operation instruction information, and determining, according to the first reference information, target control information corresponding to each to-be-controlled vehicle comprises:

determining a third target vehicle from the plurality of to-be-controlled vehicles according to the dangerous driving alarm information;

determining a first traffic scenario corresponding to the dangerous driving pre-warning information, and determining a second traffic scenario corresponding to the dangerous driving alarm information; and

obtaining fourth operation instruction information of the third target vehicle and fifth operation instruction information of a vehicle adjacent to the third target vehicle according to consistency between the first traffic scenario and the second traffic scenario.

7. The vehicle control method of claim 6, wherein the first reference information further comprises traffic information, and obtaining fourth operation instruction information of the third target vehicle and fifth operation instruction information of a vehicle adjacent to the third target vehicle according to consistency between the first traffic scenario and the second traffic scenario comprises at least one of the following:

in response to the first traffic scenario being consistent with the second traffic scenario, obtaining pre-warning operation instruction information generated in advance according to the traffic information and the dangerous driving pre-warning information, and obtaining the fourth operation instruction information of the third target vehicle and the fifth operation instruction information of the vehicle adjacent to the third target vehicle according to the pre-warning operation instruction information; or

in response to the first traffic scenario being inconsistent with the second traffic scenario, generating the fourth operation instruction information of the third target vehicle and the fifth operation instruction information of the vehicle adjacent to the third target vehicle according to the traffic information and the dangerous driving alarm information.

8. The vehicle control method of claim 1, wherein sending the target control information to the corresponding to-be-controlled vehicle comprises:

sending the target control information to the vehicle-road coordination apparatus corresponding to the to-be-controlled vehicle, such that the vehicle-road coordination apparatus forwards the target control information to the corresponding to-be-controlled vehicle.

9. A decision server, comprising a memory and a processor, wherein the memory stores a computer program which, when executed by the processor, causes the processor to perform the vehicle control method of any of claims 1 to 8.

10. A computer-readable storage medium, storing a program which, when executed by a processor, causes the processor to perform the vehicle control method of any of claims 1 to 8.

Decision server

Decision server

Road side unit

Road side unit

FIG. 1

FIG. 2

Driver assistance device

| Information transceiving | Instruction processing |
|---|---|
| Information collection | Instruction receiving |
| Information sending | Instruction execution |

FIG. 3

Vehicle-mounted terminal device

| Information transceiving | Calculation and determining | Reminding and alert |
|---|---|---|
| Information collection | Dangerous driving behavior determining | Dangerous driving reminding |
| Information sending | | Driver assistance reminding |

FIG. 4

Road side unit

| Information transceiving | Calculation and prediction | Data storage |
|---|---|---|
| Information collection | Dangerous driving behavior prediction | Traffic rule |
| Information sending | | Traffic restriction information |

FIG. 5

Road section decision server

| Information transceiving | Data processing | Traffic knowledge base | Calculation and decision |
|---|---|---|---|
| Information sending | | Traffic knowledge base | Traffic restriction information calculation |
| | Data processing | | |
| Information receiving | | Road section traffic restriction | Vehicle behavior decision |

FIG. 6

S701: Receive vehicle status information sent by a driver assistance apparatus

S702: Obtain second reference information according to the vehicle status information, and send the second reference information to a vehicle-road coordination apparatus, such that the vehicle-road coordination apparatus obtains first reference information according to second reference information sent by a plurality of to-be-controlled vehicles within a coverage area, the vehicle-road coordination apparatus sends the first reference information to a decision server, and the decision server obtains, according to the first reference information, target control information corresponding to each to-be-controlled vehicle, and sends the target control information to the vehicle-road coordination apparatus

S703: Receive the target control information sent by the vehicle-road coordination apparatus, and execute a corresponding action according to the target control information

FIG. 7

S801: Receive second reference information sent by a plurality of to-be-controlled vehicles within a coverage area

↓

S802: Obtain first reference information according to the second reference information, and send the first reference information to a decision server, such that the decision server obtains, according to the first reference information, target control information corresponding to each to-be-controlled vehicle

↓

S803: Receive the target control information sent by the decision server

↓

S804: Forward the target control information to the corresponding to-be-controlled vehicle

FIG. 8

S901: Receive first reference information collected by a vehicle-road coordination apparatus in a target road section

S902: Obtain target control information corresponding to each to-be-controlled vehicle according to the first reference information

S903: Send the target control information to the corresponding to-be-controlled vehicle, to perform control of the corresponding to-be-controlled vehicle

FIG. 9

FIG. 10

Input             Calculation             Output

FIG. 11

Input             Calculation             Output

FIG. 12

1300

Processor

1302

1301

Memory

Decision server

FIG. 13

1400

Processor

1402

1401

Memory

Vehicle-road
coordination device

FIG. 14

FIG. 15

## INTERNATIONAL SEARCH REPORT

| International application No. |
| --- |
| **PCT/CN2022/114548** |

### A. CLASSIFICATION OF SUBJECT MATTER

G08G 1/16(2006.01)i

According to International Patent Classification (IPC) or to both national classification and IPC

### B. FIELDS SEARCHED

Minimum documentation searched (classification system followed by classification symbols)

G08G B60W G05B G05D

Documentation searched other than minimum documentation to the extent that such documents are included in the fields searched

Electronic data base consulted during the international search (name of data base and, where practicable, search terms used)

CNABS; CNTXT; ENTXTC; ENTXT; VEN: 车, 控制, 路侧, 协同, 预警, 警告, 警, 决策, 危险, vehicle, car, control+, road, cooperat+, alarm, decision, danger

### C. DOCUMENTS CONSIDERED TO BE RELEVANT

| Category* | Citation of document, with indication, where appropriate, of the relevant passages | Relevant to claim No. |
| --- | --- | --- |
| X | CN 111477030 A (BEIJING AUTOMOTIVE GROUP CO., LTD. et al.) 31 July 2020 (2020-07-31)<br>    description, paragraphs 67-226, and figures 1-10 | 1-10 |
| X | CN 112700636 A (BAIDU ONLINE NETWORK TECHNOLOGY (BEIJING) CO., LTD. et al.) 23 April 2021 (2021-04-23)<br>    claims, and figures 1-6 | 1-2 |
| A | CN 113442950 A (AUTOMOTIVE INTELLIGENCE & CONTROL OF CHINA (BEIJING) CO., LTD.) 28 September 2021 (2021-09-28)<br>    entire document | 1-10 |
| A | CN 111469838 A (WUHU BETHEL AUTOMOTIVE SAFETY SYSTEMS CO., LTD.) 31 July 2020 (2020-07-31)<br>    entire document | 1-10 |
| A | WO 2020172842 A1 (SHENZHEN SENSETIME TECHNOLOGY CO., LTD.) 03 September 2020 (2020-09-03)<br>    entire document | 1-10 |

☑ Further documents are listed in the continuation of Box C.　　☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 September 2022** | **28 September 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/114548**

**C.    DOCUMENTS CONSIDERED TO BE RELEVANT**

| Category* | Citation of document, with indication, where appropriate, of the relevant passages | Relevant to claim No. |
|---|---|---|
| A | WO 2021195955 A1 (HUAWEI TECHNOLOGIES CO., LTD.) 07 October 2021 (2021-10-07)<br>      entire document | 1-10 |

Form PCT/ISA/210 (second sheet) (January 2015)

## INTERNATIONAL SEARCH REPORT
### Information on patent family members

International application No.

**PCT/CN2022/114548**

| Patent document cited in search report | | | Publication date (day/month/year) | Patent family member(s) | | | Publication date (day/month/year) |
|---|---|---|---|---|---|---|---|
| CN | 111477030 | A | 31 July 2020 | CN | 111477030 | B | 21 January 2022 |
| CN | 112700636 | A | 23 April 2021 | CN | 112700636 | B | 29 April 2022 |
| | | | | US | 2021118286 | A1 | 22 April 2021 |
| | | | | US | 11348465 | B2 | 31 May 2022 |
| CN | 113442950 | A | 28 September 2021 | CN | 113442950 | B | 23 November 2021 |
| CN | 111469838 | A | 31 July 2020 | CN | 111469838 | B | 08 February 2022 |
| WO | 2020172842 | A1 | 03 September 2020 | JP | 2022520544 | A | 31 March 2022 |
| | | | | SG | 11202108455 P | A | 29 September 2021 |
| | | | | US | 2021365696 | A1 | 25 November 2021 |
| | | | | KR | 20210115026 | A | 24 September 2021 |
| WO | 2021195955 | A1 | 07 October 2021 | CN | 112740295 | A | 30 April 2021 |
| | | | | CN | 112740295 | B | 10 May 2022 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111488392